# EUROPÄISCHE PATENTSCHRIFT

(11) **EP 3 352 957 B1**
(45) Veröffentlichungstag und Bekanntmachung des Hinweises auf die Patenterteilung: **07.06.2023**
(21) Anmeldenummer: 16775601.4
(22) Anmeldetag: 23.09.2016
(51) Int. Cl.: B27N 1/00

(54) **VERFAHREN ZUR HERSTELLUNG VON OSB-PLATTEN SOWIE OSB-PLATTE**
METHOD FOR MAUFACTURING OSB PANELS AND OSB PANEL
PROCÉDÉ DE PRODUCTION DE PANNEAUX OSB ET PANNEAU OSB

(30) Priorität: 24.09.2015 EP 15186719
(43) Veröffentlichungstag der Anmeldung: 01.08.2018
(73) Patentinhaber: SWISS KRONO Tec AG, 6004 Luzern (CH)
(72) Erfinder: KALWA, Norbert, 32805 Horn-Bad Meinberg (DE); MÜLLER, Dirk, 16816 Neuruppin (DE); THIELECKE, Gunnar, 19348 Berge OT Neuhausen (DE)
(74) Vertreter: Gramm, Lins & Partner Patent- und Rechtsanwälte PartGmbB
(86) Internationale Anmeldenummer: PCT/EP2016/072642
(87) Internationale Veröffentlichungsnummer: WO 2017/050949

(56) Entgegenhaltungen:
- EP-A1- 2 698 349
- WO-A1-2009/005974
- WO-A1-2014/072304
- CN-A- 1 451 464
- DE-A1-102007 038 041
- JP-A- 2003 071 815
- US-A1- 2005 207 967
- US-A1- 2008 281 013
- US-A1- 2011 171 482
- US-A1- 2014 255 279

## Beschreibung

Die vorliegende Anmeldung betrifft ein Verfahren zur Herstellung von OSB-Platten aus lignozellulosehaltigen Zerkleinerungsprodukten, wobei diese OSB-Platten zur Verringerung oder Verminderung der Emission von flüchtigen organischen Verbindungen (VOC) und gegebenenfalls sehr flüchtigen organischen Verbindungen (VVOC), einschließlich Terpene, Säuren und Aldehyden, bei der Herstellung mit einer Kombination von Additiven behandelt werden. Erfindungsgemäß erfolgt dabei die Behandlung mit einer ersten Komponente aus porösem Kohlenstoff und einer zweiten Komponente, einem Hydrogensulfitsalz. Die Anmeldung bezieht sich weiterhin auf mit dem erfindungsgemäßen Verfahren erhältliche OSB-Platten mit verringerter Emission von VOC einschließlich Terpene, Säuren und Aldehyden. Schließlich richtet sich die vorliegende Anmeldung auf die Verwendung einer Kombination von Additiven aus einer ersten Komponente mit einem porösem Kohlenstoff und einer zweiten Komponente aus Hydrogensulfitsalz zur Verringerung oder Verminderung der Emission von VOC aus OSB-Platten während und nach Herstellung hiervon aus lignozellulosehaltigen Zerkleinerungsprodukten.

### Stand der Technik

Lignozellulose oder lignozellulosehaltige Materialien, wie Holz und Holzzerkleinerungsprodukte, und daraus hergestellte Holzwerkstoffe, wie Holzwerkstoffplatten, enthalten unter anderem flüchtige organische Verbindungen (VOC) und sehr flüchtige organische Verbindungen (VVOC). Die Emission dieser VOC und VVOC, auch als Gesamtmenge an flüchtigen organischen Verbindungen bezeichnet (TVOC), aus den Holzwerkstoffen (HWS) stellt unter dem Aspekt der zunehmenden Nutzung von holzartigen Produkten in Innenräumen ein gravierendes Problem dar. Zu den flüchtigen organischen Verbindungen zählen neben den gesättigten und ungesättigten Aldehyden alle flüchtigen organischen Stoffe, deren Retentionszeit im Gaschromatograph zwischen C6 (Hexan) und C16 (Hexadecan) liegt. Eine entsprechende Definition hierzu findet sich auch im AgBB-Bewertungs-Schema (Ausschuss zur gesundheitlichen Bewertung von Bauprodukten, Deutschland) für VOC aus Bauprodukten, Stand 2015. Die VOC sind keine homogene Substanzklasse, sondern ein Sammelsurium von Verbindungen. Unter anderem fallen hierunter organische Säuren, gesättigte und ungesättigte Aldehyde, Alkohole, Terpene, aliphatische und aromatische Kohlenwasserstoffe und vieles mehr. Darunter werden die sehr flüchtigen organischen Verbindungen (VVOC), unter denen zum Beispiel Formaldehyd oder Ameisensäure fallen, angesiedelt. Über den VOC finden sich die schwerflüchtigen organischen Verbindungen (SVOC) mit Retentionsbereichen oberhalb von C16 bis C22.

Diese TVOC treten sowohl bei der Herstellung als auch bei der Verwendung der Holzwerkstoffe auf. Einerseits können TVOC mit VOC und VVOC bei der Aushärtung aus Klebstoffen auftreten, andererseits können diese Verbindungen durch Umsetzung von im Holzwerkstoff vorliegenden Verbindungen auftreten. Insbesondere die Emission der VOC beruht im Wesentlichen auf einer Freisetzung von aus dem Holz stammenden Verbindungen. Entsprechend steigt die Emission der VOC nach Herstellung üblicherweise erst einmal auf ein Emissionsmaximum an. Dieses Emissionsmaximum liegt, insbesondere in Bezug auf Aldehyde, meist einige Wochen nach Herstellung der entsprechenden HWS.

Die Emission dieser flüchtigen und sehr flüchtigen Holzinhaltsstoffe oder Bestandteile der Klebstoffe aus Holzprodukten einer dieser HWS stellt aufgrund verschärfter Grenzwerte bzw. einer größeren Sensibilisierung der Endverbraucher mehr und mehr ein Problem dar.

Die Freisetzung der VOC und VVOC hängt unter anderem von der Art und dem Zustand der Lignozellulosen ab, wie der Holzart, der Lagerungsdauer, den Lagerungsbedingungen des Holzes bzw. der Zerkleinerungsprodukte des Holzes, und kann in unterschiedlichen chemischen Zusammensetzungen und Mengen vorkommen. Die VOC stammen dabei im Wesentlichen von Abbaustoffen der Lignozellulosen. Prominente Vertreter hiervon sind die Terpene α-Pinen, β-Pinen, δ-3-Caren. Vor allem in Nadelbäumen, die als Rohstoff für OSB-Platten oder Faserplatten eingesetzt werden, finden sich diese Bestandteile wieder. Umwandlungsprodukte, die zum Beispiel während der Lagerung und der Bearbeitung des Holzes und der Zerkleinerungsprodukte auftreten, sind Aldehyde, wie Pentanal und Hexanal.

Vor allem Nadelhölzer, aus denen vorwiegend Spanplatten, Faserplatten wie MDF-Platten oder OSB-Platten hergestellt werden, enthalten große Mengen an Harzen und Fetten, die zur Bildung von flüchtigen organischen Terpen-Verbindungen und Aldehyden beitragen. VOC und VVOC können aber auch bei der Verwendung verschiedener Klebstoffe zur Herstellung der Holzwerkstoffe entstehen. Üblicherweise findet dabei durch vorhandenen Sauerstoff ein Oxidationsprozess der Holzinhaltsstoffe, wie der Fettsäuren, statt, die dann zu den Sekundär- bzw. Tertiäremission von Aldehyden, wie Pentanal, oder höheren Carbonsäuren führen und so zur VOC-Emission beitragen.

Das heißt, die VOC Emission aus Holzwerkstoffen beruht im Wesentlichen auf einer holzbedingten Freisetzung und nicht auf einer durch den verwendeten Klebstoff. Insbesondere durch die in den hergestellten Holzwerkstoffen andauernde Umwandlung von Bestandteilen der Holzwerkstoffe, zum Beispiel durch Fragmentierung der Harze und Fette, findet eine ständige Sekundär- bzw. Tertiäremission der genannten Verbindungen statt.

Als problematisch bezüglich der Menge und dadurch sich ergebenen unangenehmen Geruchs bzw. der Toxizität sind dabei zwei Stoffgruppen in den Mittelpunkt getreten: Terpene und gesättigte und ungesättigte Aldehyde. Während die Terpene sowohl unmittelbar aus den Zerkleinerungsprodukten und dem Holzwerkstoff emittiert werden, bilden sich die Aldehyde meist langsam aus ungesättigten Fettsäuren durch Oxidation in Anwesenheit von Luftsauerstoff. Bei der Messung der Emissionen findet man deshalb das Emissionsmaximum der Terpene meist unmittelbar nach Herstellung, während bei den Aldehyden die Emissionsmaxima üblicherweise erst nach einigen Wochen erreicht werden. In Deutschland hat der Ausschuss zur gesundheitlichen Bewertung von Bauprodukten (AgBB) ein Bewertungsschema für VOC aus Bauprodukten erarbeitet, die auch die Messung und Beurteilung der Emission entsprechend darstellen, zum Beispiel in AgBB Bewertungsschema für VOC aus Bauprodukten; Stand 2015.

Das dort beschriebene Schema macht nicht nur bezüglich der Messung sondern auch der maximal zulässigen Emission Vorgaben. Vereinfacht gesagt, muss die Emission eines Baustoffes bei 28 Tagen Prüfdauer unter normierten Bedingungen einen Wert von 1 mg/m³ unterschreiten. Für hochtoxische Verbindungen gelten zusätzliche Restriktionen. Karzinogene Stoffe dürfen beispielsweise maximal mit einer Summe von 1 µg/m³ an der Gesamtemission beteiligt sein.

Bei Holzfaserplatten ist die Emission der VOC stärker, je niedriger die Dichte der hergestellten Holzfaserplatten ist. Während bei einer Faserplatte mit erhöhter Dichte (HDF) oder einer mitteldichten Faserplatte (MDF) die Werte der VOC höchstens gering erhöht sind, ist bei leichten Faserplatten und superleichten Faserplatten unterhalb einer Rohdichte von ca. 250 kg/m³ eine erhebliche VOC-Emission zu beobachten. Aufgrund der geringen Dichte sind die Diffusionsvorgänge hier beschleunigt. Gleiches gilt für Dämmstoffplattenmit einem Rohgewicht zwischen 50 und 80 kg/m³.

Es wurden bereits vielfältige Ansätze unternommen, die Probleme der Emission von VOC und VVOC zu begrenzen. Die Zugabe von verschiedensten Additiven wird beschrieben. In der EP 2176354 wird zum Beispiel die Verwendung von einer Kombination von Additiven mit einer Pufferkapazität aus Hydrogensulfitsalzen und Sulfitsalzen beschrieben. Die WO 2007/012350 oder die DE 10160316 beschreiben Verfahren bei denen eine Komponente wie Bisulfit eingesetzt wird, wobei hierbei aber eine Beschränkung auf Faserplatten erfolgt, da das Bisulfit vor dem Refiner den Hackschnitzeln zugesetzt wird. Ein weiterer Nachteil des dort beschriebenen Verfahrens ist die Einbringung in den Refiner, da auf diese Weise die Verluste durch Verdampfen von SO₂ und durch das Abpresswasser besonders hoch sind. Die WO 2007/012350 richtet sich weiterhin auch ausschließlich auf Formaldehyd.

Die EP 2727691 B1 beschreibt ein Verfahren zur Verringerung der Emission von flüchtigen organischen Verbindungen aus Holzwerkstoffen durch Aktivkohle als Additiv. Es zeigte sich, dass durch die Aktivkohle Anteile der VOC zu reduzieren sind, allerdings konnte dieses für die heterogene Gruppe der VOC insgesamt durch Zusatz dieser Additive nicht erreicht werden. Es ist zudem bekannt, dass durch Zugabe von Reduktionsmitteln, zum Beispiel Formamidinsulfinsäure oder Ascorbinsäure, die Emission von gesättigten und ungesättigten Aldehyden reduziert werden kann. Diese Reduktion reicht aber nicht aus, um die Emission der VOC und hier der Terpene in Summe gegenüber den Vorgaben des AgBB-Schemas zu unterschreiten.

Aus der CN 1451464 A ist ein Verfahren zur Eliminierung von Aldehyden und VOC bekannt. Dazu wird ein Pflanzenextrakt genutzt, der zuvor hergestellt wurde u.a. durch Extraktion mit einer Flüssigkeit die Natriumbisulfit enthält und durch Abfiltrieren u.a. durch Einsatz von Aktivkohle als Filtrationsmittel. Es beschreibt aber nicht die Fähigkeit von Natriumbisulfit und Aktivkohle die Emission von VOC zu verringern.

Additive, die die Gesamtemission von VOC und ggf. VVOC verringern, sind kaum bekannt.

Weitere Probleme treten dadurch auf, dass die Additive meist nur als wässrige Lösung hinzugefügt werden, wodurch die Feuchte innerhalb des Produktionsprozesses erhöht wird. Der Zusatz der Additive erhöht nicht nur die Kosten sondern kann auch durch die chemische Aggressivität der Substanzen zu Korrosion an Maschinen- und Anlagenteilen führen. Weiterhin können gesundheitsschädliche Effekte durch Emission der eingesetzten Additive bzw. von Retentionsprodukten dieser mit Inhaltsstoffen der weiteren Bestandteile der Holzwerkstoffe im Herstellungsprozess, insbesondere Pressprozessen bei Wärmebehandlung, oder im späteren Gebrauch auftreten.

Außerdem können Additive, die Reaktivität der verwendeten Klebstoffe mindern. Dadurch werden mechanische Parameter der herzustellenden Holzwerkstoffplatten negativ beeinflusst. Zur Kompensation dieser nachteiligen Effekte durch Zugabe der Additive wird der Klebstoff in größeren Mengen zugegeben, um die geforderten und/oder gewünschten mechanischen Parameter zu erreichen, was die Herstellungskosten erhöht.

Wie durch die oben genannten Vorgaben zum Beispiel durch die AgBB, aber auch durch die Anforderungen der Verbraucher werden die Emissionsgrenzen immer weiter gesenkt. Entsprechend nimmt der Bedarf nach Holzwerkstoffen mit geringen VOC-Emissionen ständig zu und es besteht entsprechender Bedarf Additive bereitzustellen, die die Emission von VOC und ggf. VVOC, also die Gesamtemission aus den Holzwerkstoffen (TVOC), in ihrer ganzen Heterogenität senkt.

Hierbei ist es insbesondere wesentlich, dass auch bei längerer Nutzung die gewünschte Reduktion an TVOC, wie den VOC und ggf. VVOC, aus den Holzwerkstoffen möglich ist. Entsprechend müssen die Additive nicht nur die unmittelbare Emission der VOC bei dem Herstellungsprozess senken, sondern insbesondere auch die Emission von VOC aber auch VVOC, wie Terpene, Säuren aber auch Aldehyden und anderen Verbindungen, die als Abbauprodukte von Fettsäuren aus den Holzwerkstoffen als Sekundär- und/oder Tertiäremission freigesetzt werden, verringern.

In den letzten Jahren haben sich OSB (oriented strand board) in Europa als neuer konstruktiver Werkstoff für die verschiedensten Anwendungen etabliert. Dabei wird OSB in Europa anders als in Nordamerika nicht vorwiegend im Fertighausbau verwendet. Im Gegensatz zu den meisten anderen Holzwerkstoffen erfolgt der Einsatz dieses Produkts üblicherweise ohne eine zusätzliche Oberflächenbeschichtung. Weiter ist bei der Herstellung von OSB anders als bei anderen Holzwerkstoffen zu berücksichtigen, dass OSB im Wesentlichen aus frischem Waldholz (meist Nadelholz) hergestellt wird. Der Einsatz von Frischholz in Kombination mit der Verwendung im unbeschichteten/nicht Oberflächen veredelten Zustand führt zu Problemen bezüglich der Emission aus diesen Holzwerkstoffen.

DE 10 2007 038 041 A1 offenbart die Verwendung von Hydrogensulfit und Sulfit in Kombination zum Fangen von Aldehyden in Holzwerkstoffen.

Der vorliegenden Erfindung liegt somit die Aufgabe zugrunde, Verfahren zur Herstellung von OSB-Platten bereitzustellen, die möglichst umfassend die Emission von VOC und TVOC einschließlich der Terpene, Säuren aber auch der Aldehyde zu verringern. Hierbei sollten die Anforderungen des AgBB-Schemas erfüllt werden. Dabei sollen die Additive selbst weder toxisch sein, noch zu einer optischen Verschlechterung der Oberfläche der OSB oder anderer mechanischen Eigenschaften der OSB führen. Die OSB-Platten sollen durch die veränderte Produktion und durch die Zugabe von Hilfsstoffen nicht wesentlich teurer werden. Dabei sollten die eingesetzten Additive den Herstellungsprozess selbst nicht negativ beeinflussen, insbesondere nicht die Reaktivität der verwendeten Klebstoffe verringern.

### Beschreibung der Erfindung

Die Aufgabe der vorliegenden Erfindung wird durch ein Verfahren mit dem Merkmal des Anspruchs 1 sowie durch die Verwendung einer Kombination von Additiven gemäß Anspruch 14 und der OSB-Platten gemäß Anspruch 15 gelöst. Vorteilhafte Ausgestaltungen und Weiterbildungen der Erfindung sind in den Unteransprüchen aufgeführt.

Ein wesentlicher Aspekt der vorliegenden Erfindung ist die Verwendung der Kombination aus porösem Kohlenstoff, insbesondere Aktivkohle, mit einem Hydrogensulfitsalz, wie Ammoniumhydrogensulfit.

Das heißt in einem ersten Aspekt richtet sich die vorliegende Anmeldung auf ein Verfahren zur Herstellung von OSB-Platten aus Lignozellulose, insbesondere OSB-Platten mit einer reduzierten Emission von flüchtigen organischen Verbindungen (VOC) einschließlich Terpenen, Säuren und Aldehyden, umfassend die Schritte:
a) Bereitstellen von lignozellulosehaltigen Zerkleinerungsprodukten;
b) in Kontakt bringen der lignozellulosehaltigen Zerkleinerungsprodukte mit einer Kombination von Additiven mit einer ersten Komponente aus einem porösen Kohlenstoff und einer zweiten Komponente aus einem Hydrogensulfitsalz;
c) Verpressen der mit der Kombination von Additiven versetzten lignozellulosehaltigen Zerkleinerungsprodukten mit Klebstoff unter Wärmebehandlung zur Herstellung der OSB-Platten.

Bei den Holzwerkstoffen handelt es sich um OSB-Platten.

Durch Einsatz dieser Kombination von Additiven ist es möglich die vorliegenden Nachteile bei Verwendung von porösem Kohlenstoff zum Beispiel in Form von Aktivkohle alleine zu überwinden und insbesondere die geforderten Grenzwerte aus dem AgBB-Schema langfristig zu unterschreiten um OSB-Platten bereitzustellen. Durch die Herstellung mit den genannten Additiven ist es möglich OSB-Plattenbereitzustellen, die nun auch in zusätzlichen Bereichen, insbesondere in Innenbereichen, eingesetzt werden können. Es stellte sich heraus, dass durch den Einsatz von Aktivkohle die Gesamtmenge an VOC und den VVOC, die durch die Holzwerkstoffe emittiert werden, gesenkt werden kann und zusätzlich durch Einsatz der Hydrogensulfitsalze sich auch die Sekundär- und Tertiäremission von VOC, insbesondere hier von gesättigten und ungesättigten Aldehyden, deutlich reduziert werden kann. Diese Reduktion konnte nicht nur kurzfristig erzielt werden, sondern es zeigte sich insbesondere, dass die Reduktion auch über einen längeren Zeitraum erreicht wird. Die Kombination der Additive erlaubt, die im AgBB-Schema ausgeführten Anforderungen zu erfüllen.

Vorliegend wird unter dem Ausdruck der "Verringerung der Emission" oder "Verminderung der Emission" oder der "Vermeidung der Emission" die synonym verwendet werden, verstanden, dass im Vergleich zu einer OSB-Platte ohne erfindungsgemäßen Zusatz von Additiven die Menge an VOC und die Gesamtmenge der flüchtigen organischen Verbindungen (TVOC, total volatile organic compounds) geringer ist, also reduziert ist.

Der Ausdruck "Vermeidung von Emission" beinhaltet im Vergleich zur Kontrolle eine prozentuale Verringerung oder Verminderung der Emission gegebenenfalls bis zu einer solchen, die unterhalb der Messgrenze liegt. Unter dem Ausdruck "Reduktion" wird vorliegend eine Verminderung oder Verringerung, bis zur Vermeidung verstanden.

Vorliegend werden die Ausdrücke "lignozellulosehaltige Zerkleinerungsprodukte" und "Lignozellulosepartikel" synonym verwendet.

Das erfindungsgemäße Verfahren weist die Vorteile einer deutlich verringerten Emission von VOC einschließlich Terpenen, Säuren und Aldehyden auf. Eine solche Reduktion der Emission kann über einen längeren Zeitraum, zum Beispiel in dem geforderten Bereich der 28 Tage, erzielt werden. In bevorzugten Ausführungsformen weisen die Platten dabei keine optische Beeinträchtigung auf, während die Kosten durch Zusatz der Additive moderat bleiben. Die physikalischen und mechanischen Werte der erhaltenen OSB-Platten, ist nicht verschlechtert.

Der Vorteil liegt unter anderem darin, dass durch die Verringerung bzw. Verminderung der Emission der TVOC auch solche Stoffe in ihrer Emission niedrig sind, die auch zu einem unangenehmen Geruch der OSB-Platten beitragen, einschließlich Essigsäure, aber auch typische Aldehydgerüche dieser Platten einschließlich der stechenden Wahrnehmung von Formaldehyd.

Es ist gewünscht, dass die erfindungsgemäßen Additive freigesetzte Aldehyde reduzieren. Aldehyde können aus den Grundbausteinen der Zellulose oder Hemizellulose gebildet werden, z.b. Furfural aus Mono- und Disacchariden der Zellulose oder der Hemizellulose. Aromatische Aldehyde bilden sich u.a. während des partiell stattfindenden hydrolytischen Aufschlusses von Lignin. Entsprechend kann die erfindungsgemäße Kombination an Additiven zur Reduzierung der Emission von C₁ bis C₁₀ Aldehyden, wie Acetaldehyd, Pentanal, Hexanal, Octenal oder Furfural eingesetzt werden.

Weiterhin kann die Kombination aus Additiven die Emission von organischen Säuren reduzieren, einschließlich Alkansäuren, wie Propionsäure oder auch aromatische Säuren.

Weiterhin findet eine Reduzierung der Terpene statt. Hierunter fallen die Monoterpene und Sesquiterpene, einschließlich acyclische und cyclische Monoterpene.

Typische acyclische Terpene sind Terpenkohlenwasserstoffe wie Myrcen, Terpenalkohole wie Geraniol, Linalool, Ipsenol und Terpenaldehyde wie Citral. Vertreter monocylcischer Terpene sind p-Menthan, Terpinen, Limonen oder Carvon, und Vertreter der bicyclischen Terpene sind Caran, Pinan, Bornan sowie 3-Caren und alpha-Pinen.

Der Ausdruck "umfassend" beziehungsweise "enthaltend" schließt die Ausführungsform "bestehend aus" ein.

In einer Ausführungsform der vorliegenden Erfindung handelt es sich bei der ersten Komponente der Kombination von Additiven um Aktivkohle als porösen Kohlenstoff. Unter Aktivkohle versteht man Kohlenstoffstrukturen aus kleinsten Graphitkristallen und amorphen Kohlenstoffen poröser Strukturen und inneren Oberflächen (BET Oberflächen), üblicherweise in einem Bereich zwischen 300 und 2000 m²/g. Aktivkohle kann in Pulverform eingesetzt werden, bevorzugt ist aber der Einsatz in Form eines Granulats. Bevorzugt handelt es sich bei der Aktivkohle beziehungsweise dem porösem Kohlenstoff um einen mit einer Dichte zwischen 0,2 bis 0,6 g/cm³, wobei die bevorzugte Porengröße des porösen Kohlenstoffes, insbesondere der Aktivkohle, in Bereich von ≤ 1nm bis zu 50nm liegt.

Der poröse Kohlenstoff, zum Beispiel in Form von Aktivkohle, kann in fester Form als Pulver bevorzugt mit einem Korndurchmesser von kleiner als 1 mm und/oder als Granulat, insbesondere als Granulat in einer Korngröße von 2 bis 8 mm mit dem lignozellulosehaltigen Zerkleinerungsprodukten in Kontakt gebracht werden.

Aktivkohle kann aus pflanzlichen, tierischen oder mineralischen Rohstoffen hergestellt werden. Entsprechend kann die Aktivkohle aus Stein-, Holz-, Braunkohle stammen, aber auch aus pflanzlichen Bestandteilen, wie Kokusnussschalen, Fruchtkernen, usw., wie auch aus tierischen Kohlen.

Aktivkohle ist als Absorptionsmittel seit langem bekannt, zum Beispiel wird es eingesetzt, um unerwünschte oder schädliche Farb- und Geruchsstoffe aus Gasen, Dämpfen und Flüssigkeiten etc. zu entfernen. Weiterhin wird es in chemischen Reinigungsprozessen sowie zur Absorption von zum Beispiel Giftstoffen im pharmazeutischen Bereich eingesetzt. Aktivkohle ist dabei als Mittel zur Absorption von Flüssigkeiten oder Gasen für einen kurzen Zeitraum bekannt, nicht aber als ein Mittel zum permanenten Einsatz, zum Beispiel zum permanenten Einsatz bei der Reduktion von flüchtigen organischen Verbindungen und sehr flüchtigen organischen Verbindungen.

Die erste Komponente der Kombination von Additiven, der poröse Kohlenstoff zum Beispiel in Form einer Aktivkohle, kann zum Beispiel in einer Menge im Bereich von 0,1 bis 20 Gew.-% auf atro Lignozellulose eingebracht werden, in einer Ausführungsform ist die eingebrachte Menge, die in Kontakt gebracht wird mit den lignozellulosehaltigen Zerkleinerungsprodukten eine mit 0,1 bis 5 Gew.-% auf atro Lignozellulose.

Die Verwendung des porösen Kohlenstoffs, zum Beispiel in Form von Aktivkohle, hat verschiedenste Vorteile. Neben den wirtschaftlichen Vorteilen, einer hohen Verfügbarkeit und einem günstigen Preis der Aktivkohle erlaubt die Aktivkohle weiterhin insbesondere die Emission von Terpenen und Säuren zu reduzieren. Darüber hinaus kann im Herstellungsprozess eine Zudosierung hiervon in trockener Form als Feststoff erfolgen, wodurch die Feuchte der Ausgangsstoffe und/oder der OSB-Platten nicht erhöht wird. Zusätzliche Kosten durch zusätzliche Trocknung erübrigen sich, weiterhin sind solche porösen Kohlenstoffe nicht reaktiv mit den verwendeten Klebstoffen, die mechanischen und physikalischen Eigenschaften der hergestellten Holzwerkstoffe sind nicht verändert bzw. verschlechtert. Die Kosten sind gering, da durch die Neutralität des porösen Kohlenstoffs gegenüber dem Klebstoff keine weiteren Mengen an Klebstoff notwendig sind.

In einer weiteren Ausführungsform ist die zweite Komponente der Kombination von Additiven ein Hydrogensulfitsalz ausgewählt aus Alkali-, Erdalkali-, oder Ammoniumhydrogensulfitsalzen, einschließlich Natriumhydrogensulfit, Ammoniumhydrogensulfit, Lithiumhydrogensulfit, Kaliumhydrogensulfit, Kalziumhydrogensulfit oder Magnesiumhydrogensulfit, oder Kombinationen hiervon. Es stellte sich heraus, dass durch Verwendung des Hydrogensulfitsalzes die ungesättigten und gesättigten Aldehyde der TVOC weiter zu reduzieren. Es kann dabei ein Hydrogensulfitsalz oder eine Mischung von verschiedenen Hydrogensulfitsalzen eingesetzt werden.

In einer Ausführungsform wird die zweite Komponente der Kombination mit Additiven, das Hydrogensulfitsalz, in einer Menge von 0,1 bis 5 Gew.-% Feststoff bezogen auf atro Lignozellulose, wie 0,3 Gew.-% bis 3 Gew.-% Feststoff bezogen auf atro Lignozellulose, mit den lignozellulosehaltigen Zerkleinerungsprodukten in Kontakt gebracht.

Die Additive können dabei zu verschiedenen Zeiten im Produktionsprozess hinzugefügt werden. Dabei können die einzelnen Komponenten der Kombination von Additiven zu verschiedenen Zeitpunkten und des Produktionsprozesses auch getrennt und/oder sequentiell hinzugefügt werden. Das Additiv kann sowohl in fester Form, zum Beispiel der poröse Kohlenstoff, wie die Aktivkohle, aber auch in Form einer Suspension oder Dispersion hinzugefügt werden, zum Beispiel eine wässrige Lösung in Bezug auf die Hydrogensulfitsalze.

Der poröse Kohlenstoff, zum Beispiel als Aktivkohle, wird in einer Ausführungsform als Pulvergranulat in fester Form hinzugefügt. Die zweite Komponente, das Hydrogensulfitsalz, wird in einer Ausführungsform als Lösung, insbesondere als wässrige Lösung, zu dosiert.

Das Hinzufügen der Komponenten der Kombination von Additiven kann dabei in allen Bereichen der herzustellenden OSB-Platten erfolgen. Bei OSB-Platten kann das Additiv zum Beispiel nur in einzelnen Bereichen dieser vorliegen. Es kann dabei bei OSB-Platten eine Dosierung des Additivs in die Deckschicht und/oder Mittelschicht erfolgen, wobei die verschiedenen Komponenten in allen Schichten vorliegen können, die Komponenten getrennt in unterschiedlichen Schichten vorliegen können, oder die Komponenten in einzelnen Schichten gemeinsam und in anderen Schichten alleine vorliegen können.

Das erfindungsgemäße Verfahren kann in einer Ausführungsform dabei eines sein, wobei die erste Komponente der Kombination von Additiven, der poröse Kohlenstoff, insbesondere in Form von Aktivkohle, als Additiv mit den die Mittelschicht ausbildenden lignozellulosehaltigen Zerkleinerungsprodukten in Kontakt gebracht wird. Das heißt, der poröse Kohlenstoff, zum Beispiel in Form von Aktivkohle, wird nur in der Mittelschicht eingesetzt. Dadurch werden Beeinträchtigungen der Oberfläche zum Beispiel in Form von schwarzen Flecken, auf der sichtbaren Oberfläche der Holzwerkstoffe vermieden. In einer Ausführungsform der vorliegenden Erfindung wird der poröse Kohlenstoff somit nicht in die Deckschicht ausbildenden lignozellulosehaltigen Zerkleinerungsprodukten in Kontakt gebracht.

Die zweite Komponente der Kombination der Additive, das Hydrogensulfitsalz, kann in einer Ausführungsform in allen Schichten der OSB-Platten vorliegen, kann diese zweite Komponente sowohl in der Mittelschicht als auch in der Deckschicht vorliegen. In einer Ausführungsform wird dabei diese zweite Komponente mit den die Deckschicht ausbildenden lignozellulosehaltigen Zerkleinerungsprodukten in Kontakt gebracht, in einer anderen Ausführungsform erfolgt das in Kontakt bringen sowohl mit den lignozellulosehaltigen Zerkleinerungsprodukten, die die Mittelschicht ausbilden als auch mit denen, die die Deckschicht ausbilden.

Entsprechend betreffen weitere Ausführungsformen Verfahren, wo die zweite Komponente zumindest als Additiv mit der Deckschicht ausbildenden lignozellulosehaltigen Zerkleinerungsprodukten in Kontakt gebracht wird. Weiterhin betrifft die vorliegende Erfindung Verfahren, wo die erste Komponente der Kombination aus Additiven aus porösem Kohlenstoff, insbesondere Aktivkohle, als Additiv mit der die Mittelschicht ausbildende lignozellulosehaltigen Zerkleinerungsprodukten in Kontakt gebracht wird und die zweite Komponente der Kombination von Additiven zumindest als Additiv mit der die Deckschicht ausbildenden lignozellulosehaltigen Zerkleinerungsprodukten in Kontakt gebracht wird, bevorzugt zusätzlich mit den die Mittelschicht ausbildenden lignozellulosehaltigen Zerkleinerungsprodukten in Kontakt gebracht wird.

Dabei können die einzelnen Komponenten der Kombination von Additiven erfindungsgemäß in verschiedenen Gewichtsanteilen in der Deckschicht oder Mittelschicht vorhanden sein. Während zum Beispiel in der Deckschicht die Kombination von porösem Kohlenstoff zum Beispiel in Form von Aktivkohle und das Hydrogensulfitsalz gemeinsam vorliegen, kann der Anteil des Hydrogensulfitsalzes in der Mittelschicht geringer sein. Im Gegensatz dazu kann der Anteil des Hydrogensalzes in der Deckschicht im Vergleich zu dem Anteil des Hydrogensulfitsalzes in der Mittelschicht höher sein. Natürlich können die Anteile des Additives in beiden Schichten auch gleich sein.

In einer weiteren Ausführungsform des erfindungsgemäßen Verfahrens kann zumindest eine Komponente der Kombination von Additiven vor dem Trockner und/oder nach dem Trockner und/oder bei der Beleimung und/oder vor oder nach der Beleimung zugefügt werden.

Die Zugabe des porösen Kohlenstoffes, zum Beispiel in Form von Aktivkohle, kann bei OSB-Platten auf die gestreuten Strands erfolgen. Die Zugabe kann aber auch im Trockner, im Fallschacht vor der Streuung oder in separaten Streuapparaturen erfolgen. So kann bei OSB-Platten, die Aktivkohle nach Streuen oder Legen der unteren Deckschicht auf diese vor den Strands oder der Mittelschicht eingebracht werden. Der poröse Kohlenstoff kann auch zusammen mit den die Mittelschicht ausbildenden lignozellulosehaltigen Zerkleinerungsprodukten, zum Beispiel in Form von Strands, auf die untere Deckschicht aufgebracht werden. In einer weiteren Ausführungsform kann zusätzlich oder alleine der Aktivkohleauftrag zwischen Mittelschicht und oberer Deckschicht erfolgen. Bei separatem Aufbringen der Aktivkohle kann eine Leimumhüllung, die möglicherweise eine partielle Inaktivierung des entsprechenden porösen Kohlenstoffs ermöglicht, vermieden werden. In einer Ausführungsform erfolgt damit das in Kontakt bringen der ersten Komponente in Form des porösen Kohlenstoffs mit den Zerkleinerungsprodukten nach Beleimung dieser.

Die zweite Komponente, das Hydrogensulfitsalz kann nicht nur in der Beleimung in Kontakt mit den Zerkleinerungsprodukten gebracht werden, sondern auch im Fallschacht vor den Streuköpfen oder auch über eine Bedüsung nach den Streuköpfen am Transportband zur Presse. Insbesondere in Ausführungsformen, bei denen diese zweite Komponente entweder in der Deckschicht alleine vorliegt oder in allen Schichten vorliegt, kann das in Kontakt bringen dieser zweiten Komponente mit den lignozellulosehaltigen Zerkleinerungsprodukten vor oder nach Beleimung mit dem Klebstoff erfolgen, zum Beispiel durch Bedüsung etc.

Die Komponenten der Kombination von Additiven können gleichzeitig, getrennt oder sequentiell mit den lignozellulosehaltigen Zerkleinerungsprodukten in Kontakt gebracht werden. Wie oben ausgeführt, kann dieses bedeuten, dass eine Komponente bereits im Trockner, üblicherweise der poröse Kohlenstoff, zum Beispiel in Form der Aktivkohle, im Fallschacht vor der Streuung oder in separaten Streuapparaturen eingebracht wird, während die zweite Komponente, das Hydrogensulfitsalz, als wässrige Komponente in Zerkleinerungsprodukten vor oder nach dem Beleimen oder während des Beleimens in Kontakt gebracht wird, zum Beispiel durch Bedüsung etc. Dem Fachmann sind entsprechende Verfahren zum in Kontakt bringen der jeweiligen Komponenten bekannt.

Die Kombinationen von Additiven können dabei mit üblichen Klebstoffen erfolgen. Als Klebstoffe können die üblichen eingesetzten Klebstoffe verwendet werden. Diese Klebstoffe umfassen als Klebstoffe Phenol-Formaldehyd-Klebstoffe (PF-Klebstoffe), Klebstoffe auf Basis von Isozyanaten wie PMDI und Polyurethan-Klebstoffe (PU-Klebstoffe), Harnstoff-Formaldehyd-Klebstoffe (UF-Klebstoffe), Melamin-Harnstoff-Formaldehyd-Klebstoffe (MUF-Klebstoffe), Melamin-Harnstoff-Phenol-Formaldehyd-Klebstoffe (MUPF-Klebstoffe), Tannin-Formaldehyd-Klebstoffe (TF-Klebstoffe), oder Gemische hiervon. Diese Kombinationen von Additiven eignen sich insbesondere auch für formaldehydfreie Klebstoffe wie zum Beispiel solche auf Basis von Isozyanaten.

In einer Ausführungsform ist der Klebstoff ein nicht formaldehydhaltiger Klebstoff, wie ein Klebstoff auf Basis von Isozyanaten, wie PMDI oder PU-Klebstoffe.

Unter Lignozellulose werden vorliegend zellulosehaltige Materialien, wie Holz, verstanden. Daraus erhaltende Zerkleinerungsprodukte von Lignozellulosen umfassen insbesondere Holzstrands.

Bei den Lignozellulosen, wie den OSB-Platten und den Zerkleinerungsprodukten hiervon, kann es sich sowohl um Nadelhölzer als auch um Laubhölzer handeln. Auch Mischungen dieser beiden Holzarten sind möglich. Bevorzugt sind lignozellulosehaltige Zerkleinerungsprodukte, zum Beispiel in Form von Strands von Nadelhölzern. Die Herstellungsverfahren zur Herstellung der OSB-Platten, kann ein übliches Verfahren sein. Ggf. kann das Verfahren zusätzlich auch durch andere, dem Fachmann bekannte Verfahren zur Verminderung der Emission von flüchtigen organischen Verbindungen, sehr flüchtigen organischen Verbindungen etc. ergänzt werden.

Ein weiterer Aspekt der vorliegenden Erfindung richtet sich auf die Verwendung einer Kombination von porösem Kohlenstoff, insbesondere Aktivkohle, mit einem Hydrogensulfitsalz, insbesondere Ammoniumhydrogensulfit, als Kombination von Additiven in der Herstellung von OSB-Platten aus lignozellulosehaltigen Zerkleinerungsprodukten zur Verringerung der Emission von VOC, wobei die Komponenten der Additive gemeinsam, getrennt oder sequentiell während des Herstellungsprozesses der OSB-Platten eintragen oder auftragen werden. In einer Ausführungsform ist die Verwendung dabei eine, wobei die erste Komponente aus porösem Kohlenstoff, insbesondere Aktivkohle, als Additiv in die Mittelschicht von OSB-Platten verwendet wird und/oder die zweite Komponente in der Kombination von Additiven zumindest in der Deckschicht der OSB-Platten eingesetzt wird. In einer Ausführungsform kann die erste Komponente auch in der Mittelschicht zusammen mit der ersten Komponente dieser OSB-Platten verwendet werden.

Insbesondere in Ausführungsformen, wo die erste Komponente in der Mittelschicht vorliegt, während die zweite Komponente entweder alleine in der Deckschicht oder in der Deckschicht und in der Mittelschicht der hergestellten Holzwerkstoffplatten vorliegt, ist die Bereitstellung von OSB-Platten möglich, deren Oberfläche nicht optisch beeinträchtigt ist, und deren Emission von VOC einschließlich Terpenen, Säuren und Aldehyden (gesättigte und ungesättigte Aldehyde) reduziert ist. Die Kosten bei der Herstellung sind moderat und, darüber hinaus, sind die mechanischen und physikalischen Werte dieser hergestellten Platten nicht verschlechtert.

Schließlich werden OSB-Platten bereitgestellt, die mit dem erfindungsgemäßen Verfahren oder unter erfindungsgemäßer Verwendung der Kombination von Additiven mit porösem Kohlenstoff und Hydrogensulfitsalz hergestellt werden. Bei dem Holzwerkstoff handelt es sich um OSB-Platten.

Im Folgenden wird die Erfindung mithilfe von Beispielen näher erläutert, ohne dass sie auf diese beschränkt ist.

### Ausführungsbeispiel 1

Aus 100% Nadelholz werden Strands für die Deck- und Mittelschicht einer OSB erzeugt. Diese werden getrocknet und der Beleimung zugeführt. In der separaten Beleimung für die Deckschicht wird den Strands Ammoniumbisulfit ( 1,5 Gew.% bezogen auf Strands ) zugegeben. Die Ammoniumbisulfit-Lösung hatte dabei eine Konzentration von ca. 70 Gew.%. Die Aktivkohle wird nur zu den Strands der Mittelschicht zugegeben. Dies erfolgt hier in der Beleimung. Die Menge liegt bei 2,5 Gew.% bezogen auf Strands. Die durchschnittliche Größe der Aktivkohle-Partikel lag dabei bei ca. 4 mm. Die Strands werden anschließend auf einer Contipresse zu OSB verpreßt. Eine Anpassung des Prozesses bezüglich der Produktionsparameter ist nicht nötig. Die resultierenden Platten werden in einem Sternwender abgekühlt. Aus einer Platte wird eine Probe (hier 100 x 500 mm) geschnitten und zusammen mit einer Nullprobe (ohne Additiv) und einer OSB die lediglich 2,5 Gew% Aktivkohle in der Mittelschicht enthielt in einer Prüfkammer auf seine Emissionen hin überprüft. Diese Prüfung wurde gemäß dem AgBB-Schema durchgeführt. Aus den Prüfberichten sind die wichtigsten Einzelparameter in der unten stehenden Tabelle aufgelistet. Es handelt sich um die Emissionswerte nach 28 Tagen Prüfdauer. Während die Nullprobe und die Platte mit 2,5 Gew% in der Mittelschicht die Vorgaben des AgBB-Schemas nicht erfüllt hat, hat diese die Versuchsplatte mit Aktivkohle in der Mittelschicht und ABS in der Deckschicht erfüllt. Die Platten waren in Bezug auf ihre Farbe als gleich einzustufen. Auch die technologischen Werte einschließlich des Querzuges, der Biegefestigkeit und der Quellung zeigten keine signifikanten Unterschiede.

**Tabelle 1**

| Parameter | Nullprobe | Versuchsplatte ( 2,5 Gew% Aktivkohle in Mittelschicht ) | Versuchsplatte ( 2,5 Gew% Aktivkohle in Mittelschicht + 1,5 Gew% ASS in Deckschicht) |
|---|---|---|---|
| | in µg/m³ | in µg/m³ | in µg/m³ |
| Octenal | 57 | 21 | 7 |
| Essigsäure | 114 | 90 | 21 |
| Hexanal | 378 | 312 | 52 |
| α-Pinen | 173 | 140 | 81 |
| n-Capronsäure | 201 | n.n. | 1 |

### Ausführungsbeispiel 2:

Aus 100% Nadelholz werden Strands für die Deck- und Mittelschicht einer OSB erzeugt. Diese werden getrocknet und der Beleimung zugeführt. In der separaten Beleimung für die Deckschicht wird den Strands eine Ammoniumbisulfit-Lösung ( 1,0 Gew.% bezogen auf Strands ) zugegeben. In der separaten Beleimung für die Mittelschicht wurden 0,7 Gew.% bezogen auf Strands zugegeben. Die Ammoniumbisulfit-Lösung hatte in beiden Fällen eine Konzentration von ca. 70 Gew.%. Die Aktivkohle wird nur zu den Strands der Mittelschicht zugegeben. Dies erfolgt hier in der Beleimung. Die Menge liegt bei 2,5 Gew.% bezogen auf Strands. Die durchschnittliche Größe der Aktivkohle-Partikel lag dabei bei ca. 4 mm. Die Strands werden anschließend auf einer Contipresse zu OSB verpreßt. Eine Anpassung des Prozesses bezüglich der Produktionsparameter ist nicht nötig. Die resultierenden Platten werden in einem Sternwender abgekühlt. Aus einer Platte wird eine Probe geschnitten (100 x 500 mm) und zusammen mit einer Nullprobe in einer Prüfkammer auf seine Emissionen hin überprüft, wie in dem AgBB-Schema beschrieben. Während die Nullprobe die Vorgaben des AgBB-Schemas nicht erfüllt hat, hat diese die Versuchsplatte erfüllt.

### Ausführungsbeispiel 3

Analog zum Ausführungsbespiel 2 wurden aus 100% Nadelholz Strands für die Deck- und Mittelschicht einer OSB erzeugt. Diese wurden getrocknet und der Beleimung zugeführt. In der separaten Beleimung für die Deckschicht wurde den Strands eine Ammoniumbisulfit-Lösung (1,0 Gew.-% bezogen auf Strands) zugegeben. In einer separaten Beleimung für die Mittelschicht wurde ebenfalls eine Ammoniumbisulfit-Lösung (1,0 Gew.-% bezogen auf Strands), die Ammoniumbisulfit-Lösung hatte eine Konzentration von circa 70 Gew.-% zugefügt zusammen mit Aktivkohle, dessen Menge bei 2,0 Gew.-% bezogen auf die Strands lag. Die durchschnittliche Größe der Aktivkohlepartikel lag dabei bei circa

4 mm. Die Strands wurden anschließend auf einer Contipresse zu OSB verpresst. Analog zu dem Ausführungsbeispiel 2 wurden Proben erhalten und in einer Prüfkammer auf die Emission hin geprüft, wie in dem AgBB-Schema beschrieben. In der Tabelle 2 sind die Werte für die Emission nach 3 Tagen und 7 Tagen dargestellt:

| Parameter | Emission nach 3 Tagen | Emission nach 7 Tagen |
|---|---|---|
| | in µg/m³ | in µg/m³ |
| Formaldehyd | 20 | 18 |
| Acetaldehyd | 40 | 30 |
| Aceton | 225 | 213 |
| Hexanal | 25 | 27 |
| Alpha-Pinen | 140 | 112 |
| Camphene | 12 | 10 |
| Benzaldeyhd | 8 | 4 |
| Beta-Pinen | 21 | 16 |
| 3-Caren | 150 | 121 |
| 1-Isopropyl-2-methylbenzol | 10 | 7 |
| Limonen | 16 | 12 |
| Terpene, sonstige | 3 | 1 |
| Acetophenon | 1 | 1 |
| Andere Alkylbenzole | 4 | 3 |
| Terpene, sonstige | 8 | 5 |
| Terpene, sonstige | 10 | 6 |
| Longipinen | 3 | 1 |
| Longifolen | 7 | 5 |
| Caryophyllen | 3 | 2 |
| n-Pentadecan | 3 | 1 |
| Terpene, sonstige | 4 | 3 |

Aus dem Ausführungsbeispiel wird deutlich, dass ein OSB mit Ammoniumbisulfit in der Deckschicht und in der Mittelschicht sowie Aktivkohle in der Mittelschicht den Anforderungen des AgBB-Schemas genügen.

Die Beispiele zeigen, dass die beiden Additive in verschiedensten Kombinationen eingesetzt (Einsatz in der Deckschicht/Mittelschicht) die Emission der TVOC stark verringern.

## Patentansprüche

1. Verfahren zur Herstellung von OSB-Platten aus Lignozellulose, insbesondere OSB-Platten mit einer reduzierten Emission von flüchtigen organischen Verbindungen (VOC) einschließlich Terpenen, Säuren und Aldehyden, umfassend die Schritte:
a) Bereitstellen von lignozellulosehaltigen Zerkleinerungsprodukten;
b) in Kontakt bringen der lignozellulosehaltigen Zerkleinerungsprodukte mit einer Kombination von Additiven mit einer ersten Komponente aus einem porösen Kohlenstoff und einer zweiten Komponente aus einem Hydrogensulfitsalz;
c) Verpressen der mit der Kombination von Additiven versetzten lignozellulosehaltigen Zerkleinerungsprodukten mit Klebstoff unter Wärmebehandlung zur Herstellung der OSB-Platten.

2. Verfahren nach Anspruch 1, **dadurch gekennzeichnet, dass** die erste Komponente der Kombination von Additiven Aktivkohle ist.

3. Verfahren nach einem der vorherigen Ansprüche, **dadurch gekennzeichnet, dass** der poröse Kohlenstoff, insbesondere die Aktivkohle, in fester Form als Pulver und/oder als Granulat, insbesondere als Granulat mit einer Korngröße von 2 bis 8 mm, mit den lignozellulosehaltigen Zerkleinerungsprodukten in Kontakt gebracht wird.

4. Verfahren nach einem der vorherigen Ansprüche, **dadurch gekennzeichnet, dass** die innere Oberfläche des porösen Kohlenstoffes, insbesondere der Aktivkohle, zwischen 300 und 2000 m²/g liegt und/oder die Dichte zwischen 0,2 bis 0,6 g/cm³ und die Porengröße hiervon im Durchschnitt zwischen ≤1 nm und 50 nm liegt.

5. Verfahren nach einem der vorherigen Ansprüche, **dadurch gekennzeichnet, dass** die erste Komponente der Kombination von Additiven in einer Menge von 0,1 bis 20 Gew.-%, wie 0,1 bis 5 Gew.-%, auf atro Lignozellulose eingesetzt wird.

6. Verfahren nach einem der vorherigen Ansprüche, **dadurch gekennzeichnet, dass** die zweite Komponente der Kombination von Additiven ein Hydrogensulfitsalz ist ausgewählt aus Natriumhydrogensulfit und Ammoniumhydrogensulfit oder Kombinationen hiervon.

7. Verfahren nach einem der vorherigen Ansprüche, **dadurch gekennzeichnet, dass** die zweite Komponente der Kombination von Additiven in einer Menge von 0,1 bis 5 Gew.-% Feststoff bezogen auf atro Lignozellulose, wie 0,3 Gew.-% bis 3 Gew.-% Feststoff bezogen auf atro Lignozellulose, eingesetzt wird.

8. Verfahren nach einem der vorherigen Ansprüche, **dadurch gekennzeichnet, dass** die erste Komponente aus porösen Kohlenstoff, insbesondere Aktivkohle, als Additiv mit den eine Mittelschicht ausbildenden lignozellulosehaltigen Zerkleinerungsprodukten in Kontakt gebracht wird.

9. Verfahren nach einem der vorherigen Ansprüche, **dadurch gekennzeichnet, dass** die zweite Komponente als Additiv zumindest mit den eine Deckschicht ausbildenden lignozellulosehaltigen Zerkleinerungsprodukten in Kontakt gebracht wird.

10. Verfahren nach einem der vorherigen Ansprüche, **dadurch gekennzeichnet, dass** die erste Komponente der Kombination aus Additiven aus porösem Kohlenstoff, insbesondere Aktivkohle, als Additiv mit der die Mittelschicht ausbildenden lignozellulosehaltigen Zerkleinerungsprodukten in Kontakt gebracht wird und die zweite Komponente der Kombination von Additiven zumindest als Additiv mit der die Deckschicht ausbildenden lignozellulosehaltigen Zerkleinerungsprodukten in Kontakt gebracht wird, bevorzugt zusätzlich mit den die Mittelschicht ausbildenden lignozellulosehaltigen Zerkleinerungsprodukten in Kontakt gebracht wird.

11. Verfahren nach einem der vorherigen Ansprüche, **dadurch gekennzeichnet, dass** die erste Komponente der Kombination aus Additiven, der poröse Kohlenstoff, insbesondere Aktivkohle, zwischen der Mittelschicht und der Deckschicht aufgetragen wird.

12. Verfahren nach einem der vorherigen Ansprüche, **dadurch gekennzeichnet, dass** mindestens eine Komponente der Kombination von Additiven vor dem Trockner und/oder nach dem Trockner und/oder bei der Beleimung und/oder vor oder nach der Beleimung zugefügt wird.

13. Verfahren nach einem der vorherigen Ansprüche, **dadurch gekennzeichnet, dass** die erste Komponente und die zweite Komponente der Kombination von Additiven gleichzeitig, getrennt oder sequentiell mit dem lignozellulosehaltigen Zerkleinerungsprodukten in Kontakt gebracht werden.

14. Verwendung einer Kombination von porösem Kohlenstoff, insbesondere Aktivkohle, mit einem Hydrogensulfitsalz, insbesondere Ammoniumhydrogensulfit, als Kombination von Additiven in der Herstellung von OSB-Platten aus Lignozellulose zur Verringerung der Emission von VOC, **dadurch gekennzeichnet, dass** die Komponenten der Additive gemeinsam, getrennt oder sequentiell während des Herstellungsprozesses der OSB-Platteneintragbar oder auftragbar sind, insbesondere, dass die erste Komponente aus porösem Kohlenstoff, insbesondere Aktivkohle, als Additiv in die Mittelschicht von OSB-Platten verwendet wird und/oder die zweite Komponente der Kombination von Additiven zumindest in der Deckschicht der OSB-Platten bevorzugt auch in der Mittelschicht dieser OSB-Platten verwendet wird.

15. OSB-Platte erhältlich mit einem Verfahren gemäß einem der Ansprüche 1 bis 13.

## Claims

1. Process for the production of OSB boards from lignocellulose, in particular, OSB boards with reduced emission of volatile organic compounds (VOC) including terpenes, acids and aldehydes, comprising the steps of:
a) providing lignocellulosic comminution products;
b) contacting the lignocellulosic comminution products with a combination of additives with a first component of a porous carbon and a second component of a hydrogensulphite salt;
c) pressing the lignocellulosic comminution products mixed with the combination of additives with adhesive under heat treatment for the production of the treatment to produce the OSB boards.

2. Process according to claim 1, **characterized in that** the first component of the combination of additives is activated carbon.

3. Process according to one of the preceding claims, **characterised in that** the porous carbon, in particular the activated carbon, is in solid form as powder and/or as granules, in particular as granules with a grain size of size of 2 to 8 mm, is brought into contact with the lignocellulosic comminution products.

4. Process according to any one of the preceding claims, **characterized in that** the inner surface of the porous carbon, in particular of the activated carbon, is between 300 and 2000 m²/g and/or the density is between 0.2 to 0.6 g/cm³ and the pore size thereof is on average between ≤ 1 nm and 50 nm.

5. Process according to any one of the preceding claims, **characterized in, that** the first component of the combination of additives in an amount of 0.1 to 20% by weight, such as 0.1 to 5% by weight, on atro lignocellulose is used.

6. Process according to any one of the preceding claims, **characterized in that** the second component of the combination of additives is a hydrogen-sulphite salt selected from sodium bisulphite and ammonium bisulphite or combinations thereof.

7. A process according to any one of the preceding claims, **characterized in that** the second component of the combination of additives in an amount of 0.1 to 5% by weight of solids based on atro lignocellulose, like 0.3 wt.% to 3 wt.% solids based on atro lignocellulose is used.

8. Process according to any one of the preceding claims, **characterized in that** the first component of porous carbon, in particular active carbon, as an additive with the lignocellulosic comminution products forming a middle layer.

9. Process according to one of the preceding claims, **characterised in that** the second component is brought into contact as an additive at least with the lignocellulosic comminution products forming a top layer.

10. Process according to any one of the preceding claims, **characterized in that** the first component of the combination of additives of porous carbon, in particular activated carbon, is brought into contact as an additive with the lignocellulosic comminution products forming the middle layer, and the second component of the combination of additives is brought at least as an additive with the lignocellulosic comminution products forming the top layer, preferably additionally with the lignocellulosic comminution products forming the middle layer.

11. Process according to any one of the preceding claims, **characterized in that** the first component of the combination of additives, the porous carbon, in particular activated carbon, is applied between the middle layer and the top layer.

12. Method according to any one of the preceding claims, **characterized in that** at least one component of the combination of additives is applied before the dryer and/or after the dryer and/or during the gluing and/or the added before or after the gluing.

13. Process according to any one of the preceding claims, **characterized in that** the first component and the second component of the combination of additives are added simultaneously, separately or sequentially to the lignocellulosic comminution products.

14. The use of a combination of porous carbon, in particular activated carbon, with a hydrogen sulphite salt, in particular ammonium hydrogensulphite, as a combination of additives in the production of OSB boards from lignocellulose to reduce the emission of VOC, **characterised in that** the components of the additives are added together, separately or sequentially during the manufacturing process of the OSB boards, in particular that the first component consists of porous carbon, in particular activated carbon, as an additive into the middle layer of OSB boards and/or the second component of the combination of additives is used at least in the top layer of the OSB boards is preferably also used in the middle layer of these OSB boards.

15. OSB board obtainable by a process according to any one of claims 1 to 13.

## Revendications

1. Procédé pour la fabrication de panneaux OSB en lignocellulose, en particulier de panneaux en OSB, présentant une émission réduite de composés organiques volatils (COV), y compris les terpènes, les acides et les aldéhydes, comprenant les étapes :
a) mise à disposition de produits de broyage contenant de la lignocellulose ;
b) mise en contact des produits de broyage contenant de la lignocellulose avec une combinaison d'additifs présentant un premier composant en carbone poreux et un deuxième composant en sel d'hydrogénosulfite ;
c) pressage des produits de broyage contenant de la lignocellulose additionnés de la combinaison d'additifs avec de la colle sous traitement thermique pour la fabrication des panneaux en OSB.

2. Procédé selon la revendication 1, **caractérisé en ce que** le premier composant de la combinaison d'additifs est le charbon actif.

3. Procédé selon l'une quelconque des revendications précédentes, **caractérisé en ce que** le carbone poreux, en particulier le charbon actif, est mis en contact sous forme solide en tant que poudre et/ou en tant que granulat, en particulier en tant que granulat présentant une granulométrie de 2 à 8 mm, avec les produits de broyage contenant de la lignocellulose.

4. Procédé selon l'une quelconque des revendications précédentes, **caractérisé en ce que** la surface interne du carbone poreux, en particulier du charbon actif, est située entre 300 et 2000 m²/g et/ou la densité est située entre 0,2 à 0,6 g/cm³ et la dimension des pores correspondante est située entre < 1 nm et 50 nm.

5. Procédé selon l'une quelconque des revendications précédentes, **caractérisé en ce que** le premier composant de la combinaison d'additifs est utilisée en une quantité de 0,1 à 20% en poids, telle que de 0,1 à 5% en poids, par rapport à la lignocellulose sèche.

6. Procédé selon l'une quelconque des revendications précédentes, **caractérisé en ce que** le deuxième composant de la combinaison d'additifs est un sel d'hydrogénosulfite choisi parmi l'hydrogénosulfite de sodium et l'hydrogénosulfite d'ammonium ou leurs combinaisons.

7. Procédé selon l'une quelconque des revendications précédentes, **caractérisé en ce que** le deuxième composant de la combinaison d'additifs est utilisé en une quantité de 0,1 à 5% en poids de solide par rapport à la lignocellulose sèche, telle que de 0,3% en poids à 3% en poids de solide, par rapport à la lignocellulose sèche.

8. Procédé selon l'une quelconque des revendications précédentes, **caractérisé en ce que** le premier composant en carbone poreux, en particulier en charbon actif, est mis en contact en tant qu'additif avec les produits de broyage contenant de la lignocellulose formant une couche centrale.

9. Procédé selon l'une quelconque des revendications précédentes, **caractérisé en ce que** le deuxième composant est mis en contact en tant qu'additif au moins avec les produits de broyage contenant de la lignocellulose formant une couche de recouvrement.

10. Procédé selon l'une quelconque des revendications précédentes, **caractérisé en ce que** le premier composant de la combinaison d'additifs en carbone poreux, en particulier en charbon actif, est mis en contact en tant qu'additif avec les produits de broyage contenant de la lignocellulose formant la couche centrale et le deuxième composant de la combinaison d'additifs est mis en contact en tant qu'additif au moins avec les produits de broyage contenant de la lignocellulose formant la couche de recouvrement, de préférence en outre avec les produits de broyage contenant de la lignocellulose formant la couche centrale.

11. Procédé selon l'une quelconque des revendications précédentes, **caractérisé en ce que** le premier composant de la combinaison d'additifs, le carbone poreux, en particulier le charbon actif, est appliqué entre la couche centrale et la couche de recouvrement.

12. Procédé selon l'une quelconque des revendications précédentes, **caractérisé**
**en ce qu'**au moins un composant de la combinaison d'additifs est ajouté en amont du séchoir et/ou en aval du séchoir et/ou lors de l'encollage et/ou en aval ou en amont de l'encollage.

13. Procédé selon l'une quelconque des revendications précédentes, **caractérisé en ce que** le premier composant et le deuxième composant de la combinaison d'additifs sont mis en contact simultanément, séparément ou séquentiellement avec les produits de broyage contenant de la lignocellulose.

14. Utilisation d'une combinaison de carbone poreux, en particulier de charbon actif, avec un sel d'hydrogénosulfite, en particulier l'hydrogénosulfite d'ammonium, comme combinaison d'additifs dans la fabrication de panneaux en OSB en lignocellulose pour la diminution de l'émission de COV, **caractérisée** en ce les composants des additifs peuvent être introduits ou appliqués ensemble, séparément ou séquentiellement pendant le procédé de fabrication des panneaux en OSB, en particulier en ce que le premier composant en carbone poreux, en particulier en charbon actif, est utilisé comme additif dans la couche centrale des panneaux en OSB et/ou le deuxième composant de la combinaison d'additifs est utilisé au moins dans la couche de recouvrement des panneaux en OSB, de préférence également dans la couche centrale de ces panneaux en OSB.

15. Panneau en OSB pouvant être obtenu par un procédé selon l'une quelconque des revendications 1 à 13.
